# DEMANDE DE BREVET EUROPEEN

(11) **EP 4 303 082 A1**
(43) Date de publication de la demande: **10.01.2024**
(21) Numéro de dépôt: 23158369.1
(22) Date de dépôt: 23.02.2023
(51) Int. Cl.: B60R 22/20

(54) **PRE-EQUIPEMENT POUR PIED MILIEU DE VEHICULE AUTOMOBILE**

(30) Priorité: 04.07.2022 FR 2206790
(71) Demandeur: Eurostyle Systems Tech Center France, 36000 Châteauroux (FR)
(72) Inventeur: HANTSCHOOTTE, Thierry, 36230 MONTIPOURET (FR); SAIPHOU, Yann, 36250 SAINT MAUR (FR)
(74) Mandataire: Berger, Helmut

(57) **Abrégé**

L'invention concerne un pré-équipement (5) pour pied milieu de véhicule automobile comportant une garniture (16) comprenant des glissières (23, 24) rectilignes, et un rideau (17) comprenant un corps plan de forme sensiblement rectangulaire avec deux premiers côtés et deux deuxièmes côtés adapté à coulisser selon ses premiers côtés le long des glissières et au moins une première languette (29) plane s'étendant dans le prolongement d'un premier côté depuis un deuxième côté et étant élastiquement flexible par rapport au corps selon un axe de flexion parallèle au deuxième côté, la garniture comprenant un élément de retenue (25) décalé transversalement par rapport à la première glissière (23) et formant une cavité , la première languette comprenant un ergot situé à distance de l'axe de flexion, venant de formation avec la première languette et faisant saillie transversalement vers l'extérieur, l'ergot étant adapté à surmonter l'élément de retenue par application d'une première force perpendiculairement à la première languette à distance de l'axe de flexion et de l'ergot dans le sens de la largeur de la première languette et torsion élastique de la première languette autour d'un axe de torsion sensiblement perpendiculaire à l'axe de flexion, et à s'insérer dans la cavité pour y être retenu et immobiliser le rideau par rapport à la garniture dans une position de livraison.

## Description

### Domaine technique de l'invention

La présente invention concerne de manière générale le domaine automobile, et notamment l'équipement intérieur des véhicules automobiles.

Elle concerne plus particulièrement un pré-équipement pour un pied milieu d'un véhicule automobile.

Elle concerne également un procédé d'assemblage et d'immobilisation en position de livraison d'un rideau de réglage ceinture avec une garniture de pied milieu.

### État de la technique

Le pied milieu d'un véhicule automobile est une pièce de la carrosserie du véhicule qui est placée de chaque côté du véhicule, entre les portes avant et arrière, et qui relie le bas de caisse (partie inférieure) au pavillon (partie supérieure) du véhicule. Le pied milieu participe, avec les autres pièces de la carrosserie, à la structure de la carrosserie et est conçu pour résister à des efforts de déformation très importants, notamment lors de chocs latéraux. Il est généralement formé de différents éléments de tôle soudés entre eux. C'est donc une pièce qui est à la fois inesthétique dans l'habitacle du véhicule et qui peut être à la fois dangereuse pour les occupants du véhicule, à cause d'éventuelles parties coupantes de tôle par exemple.

Ainsi, il est connu de l'art antérieur qu'un pré-équipement pour pied milieu comporte une pièce appelée garniture de pied milieu qui est destinée à recouvrir au moins partiellement le pied milieu, afin qu'il ne puisse être ni vu ni touché par les occupants du véhicule.

Par ailleurs, généralement, il est prévu de fixer sur le pied milieu du véhicule un mécanisme de réglage, dit « *mécanisme de réglage ceinture* » permettant pour des raisons d'ergonomie le réglage en hauteur du bloc-ceinture pour le conducteur du véhicule ou son passager. À cet effet, la garniture de pied milieu comporte une large ouverture qui, lorsque le pré-équipement est monté sur le pied milieu, vient en regard de ce mécanisme de réglage qui d'ailleurs fait légèrement saillie au travers de cette ouverture.

Comme ce mécanisme de réglage est lui aussi inesthétique, le pré-équipement de pied milieu comporte également un rideau de réglage ceinture destiné à masquer au moins partiellement ce mécanisme de réglage ceinture milieu.

Ce rideau comprend notamment un corps et la garniture comprend des glissières qui sont adaptées à accueillir celui-ci.

Toujours de manière connue, le rideau présente généralement lui-même une ouverture qui, lorsqu'il est accueilli par les glissières, se superpose en totalité ou en partie, avec l'ouverture de la garniture, et qui, après montage du pré-équipement sur le pied milieu, laisse sortir la partie du mécanisme de réglage destinée au montage du bloc-ceinture.

Par ailleurs, le rideau comprend également une attache qui est reliée au corps et qui est adaptée à être attachée à la garniture pour maintenir le corps du rideau dans une position dite « *position de livraison »* dans laquelle il est immobilisé entre les glissières de la garniture.

En pratique, cette position de livraison permet de s'assurer que, lors du montage du pré-équipement sur le pied milieu, l'ouverture pratiquée dans le corps du rideau se retrouve en regard de la partie du mécanisme de réglage destinée au montage du bloc-ceinture (la position de cette partie par rapport au pied milieu étant elle-même prédéterminée sur la chaîne de montage du véhicule). Cette livraison du pré-équipement de pied milieu avec un rideau pré-positionné correctement et bloqué en position permet un assemblage facile et rapide du pré-équipement sur le pied milieu.

Toutefois, le corps est susceptible, lorsqu'il est soumis à une force de libération sensiblement parallèle aux glissières, de se libérer de sa position de livraison pour coulisser ensuite librement entre celles-ci. Cette force de libération peut par exemple résulter du tout premier actionnement du mécanisme de réglage ceinture par le conducteur ou le passager avant du véhicule. Elle pourrait également résulter du tout premier actionnement du mécanisme de réglage ceinture par un opérateur sur la chaîne de montage du véhicule pour vérifier que le mécanisme de réglage fonctionne correctement.

De préférence, une fois libéré de sa position de livraison, le rideau ne peut plus se retrouver bloqué dans cette position. En d'autres termes, on pourrait dire que le blocage du rideau en position de livraison est « *à usage unique ».*

On connaît par exemple du document CN110509886A un pré-équipement de pied milieu dans lequel il est prévu un organe d'attache à usage unique permettant de lier le rideau à la garniture et de le maintenir dans une position de livraison haute.

Plus précisément, et comme le montrent les figures 2, 4, 6 et 8 du document CN110509886A, le rideau 201 possède au niveau de son bord supérieur (proche du haut de la garniture 101) un crochet venant de formation avec le rideau et comprenant une tige 205 souple, sensiblement en forme de L inversé, qui s'étend depuis ce bord supérieur jusqu'à un bouton circulaire 206. Par ailleurs, la garniture possède, dans sa partie supérieure, sur sa face en regard du rideau, un anneau 106 partiellement ouvert, sensiblement en forme de C, dont le diamètre intérieur est sensiblement identique à celui du bouton.

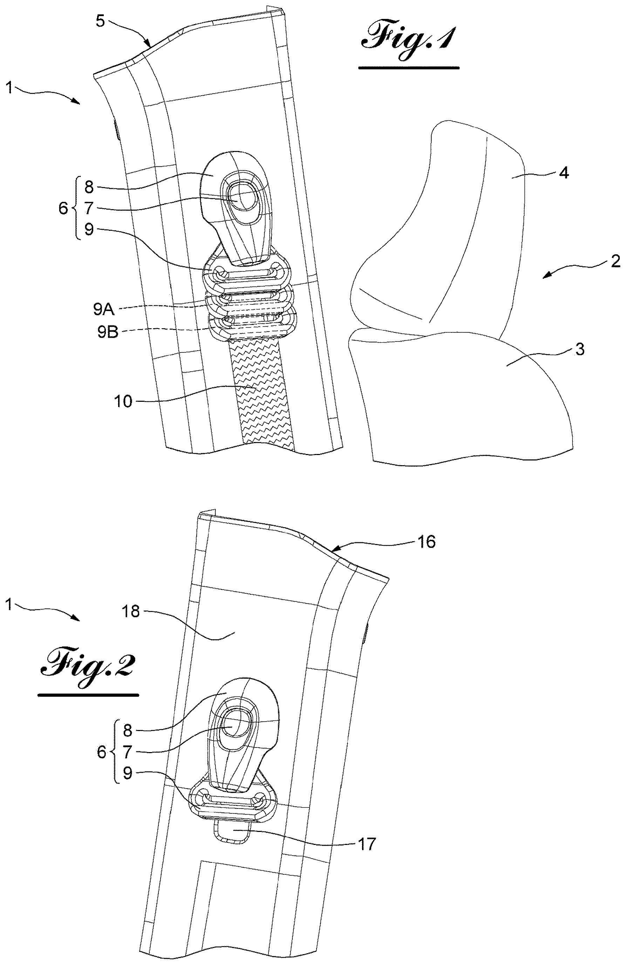

En pratique, pour « accrocher » le rideau à la garniture, un opérateur doit attraper le crochet et venir introduire le bouton dans l'anneau en forme de C, tout d'abord en le positionnant précisément au-dessus de l'anneau puis en le glissant par le dessus à l'intérieur de celui-ci pour le clipper. L'opérateur doit faire cela en prenant soin de bien positionner le crochet de sorte que sa tige passe également par l'ouverture de l'anneau (voir figure 2).

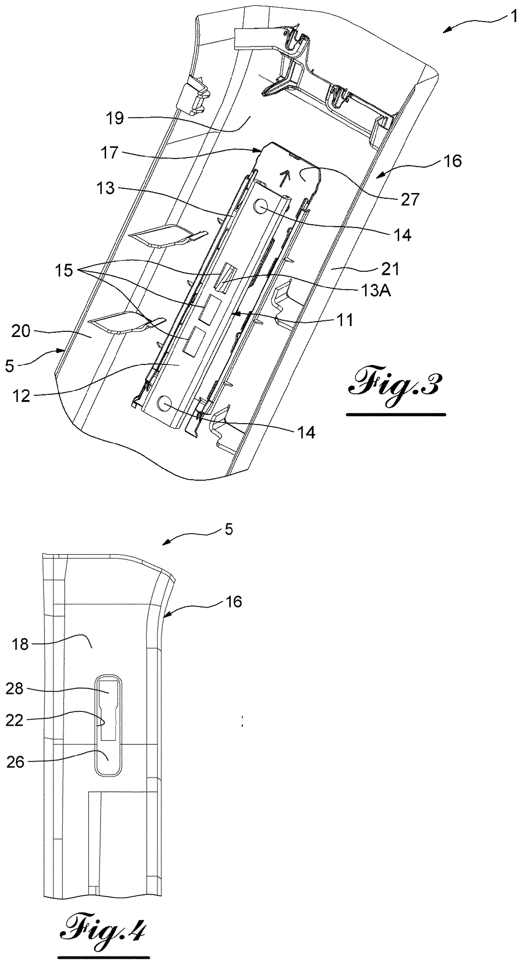

Ensuite, lors du coulissement vers le bas du rideau, par exemple lors de l'actionnement du mécanisme de réglage ceinture, le crochet du rideau va se détacher par désengagement du bouton d'avec l'anneau, le bouton glissant hors de l'anneau au travers de l'ouverture du C (voir figure 4, 6 et 8).

L'inconvénient de la solution du document CN110509886A est qu'elle requiert une opération manuelle pour mettre en place le crochet dans l'anneau. Cette opération est minutieuse et coûteuse et n'est malheureusement pas automatisable.

On connaît également du document FR3033762 un pré-équipement de pied milieu dans lequel le rideau est fixée à la garniture dans sa position haute par une attache cassable qui est adaptée pour être rompue après l'assemblage. Cette attache est fixée par une extrémité au bord supérieur du rideau et par son autre extrémité (percée d'un trou) **à un pion qui est soudé** sur la face interne de la garniture. Entre ses deux extrémités de fixation, l'attache comporte une partie en forme de languette qui est pourvue d'une « *zone de rupture* » d'une épaisseur prédéterminée.

Cette zone de rupture forme une partie frangible de l'attache qui est adaptée à ne pas rompre lors du montage du pré-équipement sur le pied milieu mais au contraire à rompre lors du premier actionnement du mécanisme de réglage ceinture.

En effet, lorsqu'on va agir sur le rideau du pré-équipement, en appliquant une force de libération sur celui-ci, la partie frangible va se casser en premier avant que la liaison entre l'attache et la garniture ne se rompe, de sorte que le corps est libre de se déplacer en translation dans les glissières.

L'inconvénient de cette solution est que la cassure entre l'attache et le corps du rideau n'est pas très bien maîtrisée, et des débris peuvent être générés lors de cette cassure. De tels débris peuvent alors se disperser dans l'espace compris entre le pied milieu et la garniture et être la source de bruits parasites.

Un autre inconvénient de cette solution antérieure de blocage du rideau en position de livraison est qu'il faut une opération supplémentaire de fixation de l'attache à la garniture, ce qui renchérit automatiquement le coût de fabrication d'un tel pré-équipement. Elle est donc difficile à automatiser et nécessite l'intervention d'un opérateur qui va venir fixer l'attache sur la garniture du pré-équipement.

Enfin, un autre inconvénient de cette solution est qu'un tel système d'attache du rideau à la garniture ne peut marcher qu'une seule fois. Une fois séparée du corps, l'attache ne peut plus être utilisée à nouveau pour bloquer le rideau en position de livraison.

### Présentation de l'invention

Afin de remédier aux inconvénients précités de l'état de la technique, la présente invention propose un pré-équipement de pied milieu dans lequel, d'une part, l'opération de blocage du rideau en position de livraison par rapport à la garniture est facilement automatisable et est fiable, sans risque que le blocage se défasse accidentellement et dans lequel, d'autre part, aucun élément du rideau ne risque de se séparer du rideau au cours de sa libération de la position de livraison.

Plus particulièrement, on propose selon l'invention un pré-équipement pour un pied milieu d'un véhicule automobile comportant :
- une garniture de pied milieu comprenant un système de glissières rectilignes ; et
- un rideau de réglage ceinture comprenant un corps plan de forme sensiblement rectangulaire avec deux premiers côtés et deux deuxièmes côtés, ledit corps étant adapté à coulisser selon ses premiers côtés le long desdites glissières ; et au moins une première languette plane s'étendant dans le prolongement d'un premier côté dudit corps depuis un deuxième côté dudit corps, ladite languette étant élastiquement flexible par rapport audit corps selon un axe de flexion parallèle audit deuxième côté,
   ladite garniture comprenant un élément de retenue décalé transversalement par rapport à une première glissière et formant une cavité,
   ladite première languette comprenant un ergot situé à distance dudit axe de flexion, ledit ergot venant de formation avec ladite première languette et faisant saillie transversalement vers l'extérieur,
   ledit ergot étant adapté à surmonter ledit élément de retenue par application d'une première force perpendiculairement à ladite première languette à distance dudit axe de flexion et dudit ergot dans le sens de la largeur de ladite première languette et torsion élastique de la première languette autour d'un axe de torsion sensiblement perpendiculaire audit axe de flexion, et à s'insérer dans ladite cavité pour y être retenu et immobiliser ledit rideau par rapport à ladite garniture dans une position de livraison.

Ainsi, grâce à l'invention, il est possible d'assembler facilement et de manière démontable le rideau avec la garniture pour le bloquer en position de livraison avant le montage du pré-équipement sur le pied milieu du véhicule automobile.

En effet, grâce à l'emboîtage et au désemboîtage élastique, l'intégrité du rideau est conservée et aucune partie de celui-ci - ni d'ailleurs de la garniture - n'est cassée lors du premier actionnement du mécanisme de réglage. Il n'y a donc pas de risque de bruits parasites dans l'habitacle.

De plus, l'emboîture permet d'ajuster facilement les efforts (*i.e.* forces) mécaniques nécessaires au besoin du système. Par exemple, pour faciliter le montage et le blocage en position de livraison du rideau, on peut prévoir que la force nécessaire pour emboîter le rideau avec la garniture soit relativement faible. Au contraire, pour éviter que le rideau ne sorte trop facilement de sa position de livraison avant actionnement du mécanisme de réglage, on peut par exemple fixer que la force nécessaire pour désemboîter le rideau et la garniture soit relativement importante.

Par ailleurs, l'assemblage par emboîtage, respectivement désemboîtage, réversible permet d'enclencher, respectivement de désenclencher, le point dur de livraison autant de fois que l'on souhaite, par exemple pour le tester, ou pour contrôler le glissement du rideau par rapport à la garniture, avant ou après livraison.

Enfin, l'assemblage du rideau et de la garniture peut être réalisé facilement sans aucun outil, par un opérateur ou même un robot de montage. Pour cela, il suffit d'appliquer une première force perpendiculairement à ladite première languette à distance dudit axe de flexion et dudit ergot dans le sens de la largeur de ladite première languette perpendiculairement à la première languette, pour tordre et faire fléchir la languette de manière à ce que l'ergot surmonte l'élément de retenue et s'insère dans la cavité.

En d'autres termes, grâce à l'invention, il est possible de créer une liaison provisoire entre le rideau et la garniture, dont on peut ajuster la solidité de telle sorte qu'elle soit non seulement suffisamment forte pour pouvoir maintenir le rideau en position de livraison avant montage du pré-équipement, mais aussi surtout suffisamment faible pour qu'aucun élément ne se sépare du rideau lors de sa libération.

D'autres caractéristiques non limitatives et avantageuses du dispositif/procédé conforme à l'invention, prises individuellement ou selon toutes les combinaisons techniquement possibles, sont les suivantes :
- ledit ergot présente une extrémité libre qui coopère avec un bourrelet de ladite cavité pour, lors de l'application d'une deuxième force sur le rideau sensiblement parallèlement audit corps, fléchir ladite première languette et guider ledit ergot vers sa désinsertion de ladite cavité ;
- ladite extrémité libre est biseautée et ledit bourrelet est chanfreiné ;
- ladite garniture et ledit rideau sont des pièces en plastique moulé ;
- ledit plastique moulé est un polypropylène ;
- ladite première languette du rideau comprend une butée venant en appui sur une extrémité de ladite première glissière pour référencer ladite position de livraison du rideau par rapport à ladite garniture ;
- ledit rideau comprend une deuxième languette identique à la première languette qui s'étend dans le prolongement d'un autre premier côté dudit corps depuis le même deuxième côté dudit corps que la première languette.

On propose également un procédé d'assemblage et d'immobilisation en position de livraison d'un rideau de réglage ceinture avec une garniture de pied milieu pour un pré-équipement pour un pied milieu d'un véhicule automobile conforme à l'invention, ledit procédé comportant :
- une étape d'insertion dudit corps du rideau dans lesdites glissières de la garniture jusqu'à ladite position de livraison ; et
- une étape d'application d'une première force perpendiculairement à ladite première languette du rideau à distance dudit axe de flexion et dudit ergot dans le sens de la largeur de ladite première languette de sorte que, par torsion élastique de la première languette autour d'un axe de torsion sensiblement perpendiculaire audit axe de flexion, ledit ergot surmonte ledit élément de retenue et s'insère dans ladite cavité pour y être retenu, ledit rideau étant alors immobilisé par rapport à ladite garniture dans ladite position de livraison.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

L'invention n'est pas limitée aux modes de réalisation illustrés sur les dessins. En conséquence, il faut comprendre que, lorsque les caractéristiques mentionnées dans les revendications sont suivies de signe de référence, ces signes sont inclus uniquement dans le but d'améliorer l'intelligibilité des revendications et ne limitent aucunement la portée des revendications.

### Sur les dessins annexés :

[Fig. 1] montre une partie d'habitacle de véhicule avec une structure de pied milieu comprenant un pré-équipement selon l'invention et un siège avant de véhicule.
[Fig. 2] est une vue côté habitacle montrant la structure de la figure 1 avec la garniture et le rideau de son pré-équipement.
[Fig. 3] est une vue côté pied milieu montrant la structure de la figure 1 avec un mécanisme de réglage ceinture.
[Fig. 4] montre une vue de face (côté habitacle) du pré-équipement de la figure 1 avec le rideau en position de réglage haute.
[Fig. 5] est une vue en perspective (côté pied milieu) du pré-équipement de la figure 4.
[Fig. 6] montre une vue de face (côté habitacle) du pré-équipement de la figure 1 avec le rideau en position de réglage basse.
[Fig. 7] est une vue en perspective (côté pied milieu) du pré-équipement de la figure 6.
[Fig. 8] est une vue en perspective (côté pied milieu) de la garniture du pré-équipement de la figure 1.
[Fig. 9] est une vue de face du rideau du pré-équipement de la figure 1.
[Fig. 10] est une vue de détail en perspective du rideau de la figure 9 montrant les deux languettes du rideau.
[Fig. 11] est une vue en perspective du rideau en position de livraison avec la languette et son ergot bloqués.
[Fig. 12] est une vue de dessus de la figure 11.
[Fig. 13] est une vue en coupe de la figure 11 montrant la languette pliée du rideau en position de livraison.
[Fig. 14] est une vue en coupe montrant la languette du rideau ayant surmonté le bourrelet dans la cavité.
[Fig. 15] est une vue en coupe lorsque le point dur de livraison du rideau a été débrayé.
[Fig. 16] est une vue en perspective du rideau en position de réglage haute par rapport à la garniture, avec la languette et son ergot libres.
[Fig. 17] est une vue de dessus de la figure 16.
[Fig. 18] est une vue de côté de la figure 16.
[Fig. 19] est une vue de côté montrant le rideau dans sa position de réglage intermédiaire par rapport à la garniture.
[Fig. 20] est une vue de détail de la garniture de la figure 8 montrant son élément de blocage.
[Fig. 21] est une vue de détail de la première languette du rideau de la figure 10.

Les éléments identiques ou correspondants des différents modes de réalisation seront autant que possible identifiés par les mêmes signes de référence, et ne seront pas décrits à chaque fois.

Sur la figure 1, on a représenté une partie d'un intérieur de véhicule automobile montrant l'agencement d'une structure 1 de pied milieu et d'un siège avant 2, ici le siège avant gauche, avec son dossier 3 et son appui-tête 4. Sans que cela ne soit limitatif, on considérera dans la suite que le siège avant 2 est celui du conducteur (véhicule à conduite à gauche).

La structure 1 de pied milieu comporte un pré-équipement 5 et un bloc-ceinture 6. Ce pré-équipement 5, qui sera appelé ensemble 5 de pied milieu et décrit plus en détail par la suite et qui est l'objet de la présente invention, est destiné notamment à masquer le pied milieu, qui est une pièce mécanique inesthétique et parfois aussi dangereuse qui pourrait blesser les occupants du véhicule.

De manière connue, et comme cela est représenté sur la figure 1, le bloc-ceinture 6 comprend un bouton de réglage 7 ceinture, un enjoliveur 8 entourant ce bouton de réglage 7, et une boucle de renvoi 9 ceinture dans laquelle une ceinture 10 de sécurité vient passer, l'une des extrémités de la ceinture 10 étant relié à un enrouleur de ceinture (non représenté) et l'autre extrémité étant fixée sur la caisse ou le siège du véhicule.

Comme le montre la figure 3, le bloc-ceinture 6 fait partie plus généralement du mécanisme de réglage 11 ceinture qui comprend également un rail 12 et un chariot 13. Ce rail 12 est destiné à être fixé sur le pied milieu (non représenté) du véhicule, par exemple par soudage ou par vissage au travers de trous de montage 14 du rail 12. Pour des raisons de contraintes mécaniques sur la carrosserie du véhicule, le rail 12 est généralement une pièce métallique, en particulier en acier, par exemple en inox.

Le chariot 13 est généralement réalisé en acier adapté aux contraintes mécaniques et inclut un élément métallique pour la fixation de la boucle de renvoi 9, par exemple au moyen d'une vis. On notera qu'après fixation, la boucle de renvoi 9 reste mobile en rotation par rapport au chariot 13 de manière à tourner lorsque la ceinture 10 est manipulée par le conducteur. L'enjoliveur 8 du bloc-ceinture 6 a notamment pour fonction de cacher la vis de fixation de la boucle de renvoi 9 sur le chariot 13.

Par ailleurs, le chariot 13 est adapté à coulisser le long du rail 12 pour permettre le réglage de la position en hauteur de la ceinture 10, et plus précisément de la boucle de renvoi 9 fixée sur le chariot 13. Ici, le mécanisme de réglage 11 ceinture ne permet ce réglage que selon trois positions prédéterminées : une position haute (cas de la boucle de renvoi 9 sur la figure 1), une position intermédiaire (référence 9A) et une position basse (référence 9B). À cet effet, il est prévu trois trous de positionnement 15 dans lesquels des moyens d'encliquetage 13A du chariot 13 viennent s'insérer pour le maintenir en position. Le bouton de réglage 7 du bloc-ceinture 6 autorise, lorsqu'il est enfoncé, la libération de ces moyens d'encliquetage 13A de sorte que le conducteur peut faire glisser le chariot 13 le long du rail 12 pour le positionner à une autre position de réglage du mécanisme 11, où les moyens d'encliquetage 13A vont venir s'engager dans un nouveau trou de positionnement 15 correspondant à la nouvelle position de la ceinture 10.

Comme le montrent les figures 4 à 7, l'ensemble 5 de pied milieu comporte, d'une part, une garniture 16 de pied milieu et, d'autre part, un rideau 17 de réglage ceinture.

Ce rideau 17 et cette garniture 16 sont destinés à masquer le mécanisme de réglage 11 ceinture, et notamment le rail 12, lorsque l'ensemble 5 est fixé sur le pied milieu du véhicule (voir par exemple figures 2 et 3).

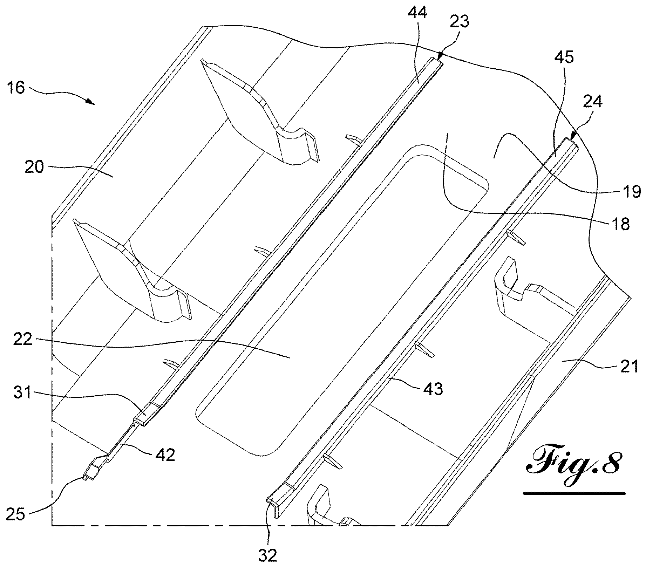

Tout d'abord, on voit plus précisément sur la figure 8 que la garniture 16 présente une face avant 18 (voir aussi figure 2 par exemple) tournée vers l'intérieur de l'habitacle du véhicule, une face arrière 19 orientée vers le pied milieu (et en regard avec lui une fois montée), deux bords latéraux 20, 21 recourbés vers l'arrière (c'est-à-dire du côté de la face arrière 19), et une ouverture 22, ici rectangulaire et à bords arrondis, qui, lorsque la garniture 16 est montée sur le pied milieu est agencée en regard du rail 12 du mécanisme de réglage 11 fixé sur le pied milieu.

La garniture 16 comprend également sur sa face arrière 19 deux rails de glissement, ou glissières 23, 24, qui s'étendent parallèlement de part et d'autre de l'ouverture 22.

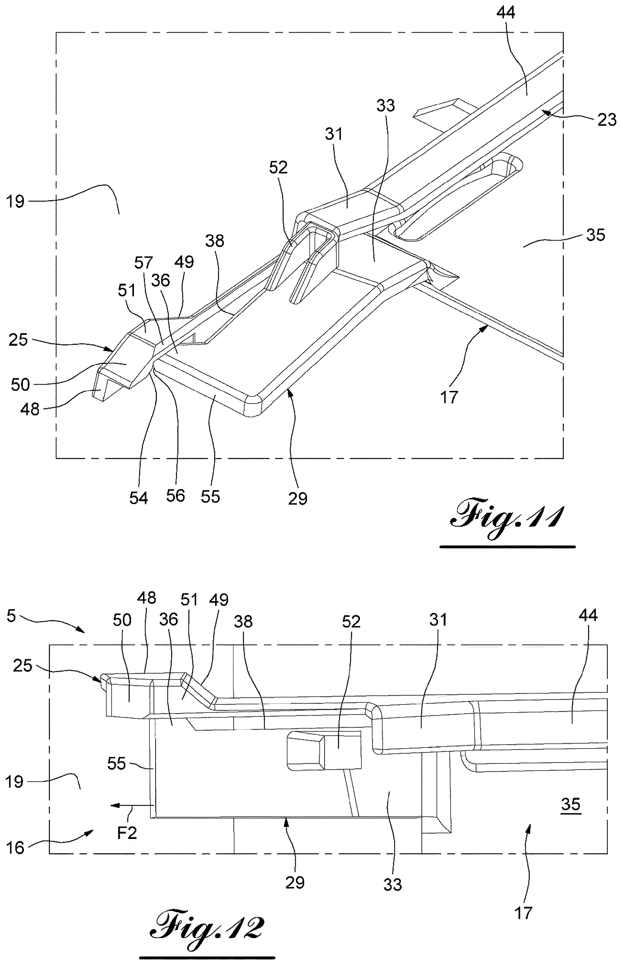

Ces glissières 23, 24 ont ici des longueurs supérieures à la longueur *(i.e.* la plus grande dimension) de l'ouverture 22. La première glissière 23 est d'ailleurs légèrement plus longue que la deuxième glissière 24, parce qu'elle se prolonge en un élément de blocage 25 (voir aussi figures 11, 16 et 20) qui est un élément essentiel de l'invention et dont la structure sera décrite plus en détail par la suite.

Cet élément de blocage 25 est situé ici au niveau de la partie inférieure de la première glissière 23, c'est-à-dire la partie située vers le plancher du véhicule (la partie supérieure étant située vers le toit du véhicule).

Comme cela est visible sur la figure 8 (surtout pour la deuxième glissière 24), les glissières 23, 24 présentent une section en forme de « *L* » inversé et comprennent chacune un mur 42, 43 (jambe du « *L* ») plan et rectiligne s'élevant sensiblement perpendiculairement depuis la face arrière 19 de la garniture 16, et un toit 44, 45 (pied du « *L* »), également rectiligne, venant respectivement de formation avec les murs 42, 43 et s'étendant perpendiculairement à eux vers l'intérieur, c'est-à-dire l'un vers l'autre, en direction de l'ouverture 22.

Comme le montre toujours la figure 8, les toits 44, 45 des glissières 23, 24 sont planes sur la majeure partie de leur longueur (de haut en bas lorsque la garniture 16 et installée) mais se terminent, ici à leur extrémité inférieure (en bas), par des portions de plans inclinés 31, 32 vers l'arrière *(i.e.* en s'éloignant de la face arrière 19 de la garniture 16).

Dans le mode de réalisation particulier décrit ici en lien avec les figures, on notera toutefois que la première glissière 23, en particulier son premier mur 42, se prolonge au-delà de la première portion de plan incliné 31, vers l'élément de blocage 25 de la garniture 16.

Avantageusement, les plans inclinés 31, 32 constituent des bouches d'insertion pour les glissières 23, 24 de la garniture 16 qui vont faciliter l'introduction du rideau 17 dans celles-ci (voir ci-dessous) lors du montage initial du rideau 17 avec la garniture 16.

La garniture 16 de pied milieu est généralement une pièce plastique, par exemple en polypropylène, ayant des dimensions adaptées pour couvrir toute la hauteur du pied milieu. Elle peut présenter sur sa face avant 18 une apparence plaisante au regard ou agréable au toucher.

On va maintenant décrire la structure du rideau 17 de réglage ceinture.

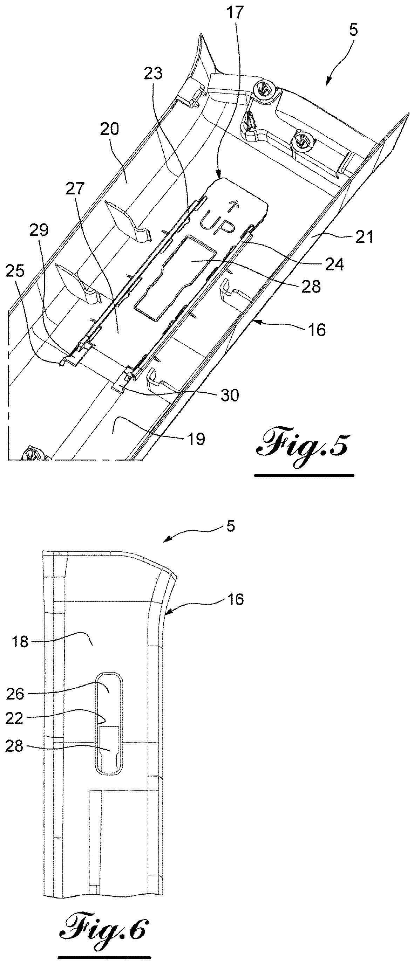

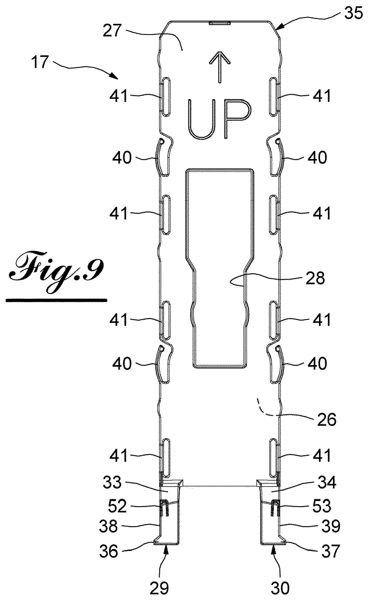

Sur la figure 9, on observe que ce rideau 17 comprend une partie principale, ou corps 35, qui se présente ici sous la forme d'une plaque sensiblement plane et rectangulaire. Comme la garniture 16, ce corps 35 présente une face avant 26 (voir aussi figures 4 et 6), une face arrière 27 (voir aussi figures 3, 5 et 7) et une ouverture 28 également sensiblement rectangulaire.

Le corps 35 a une largeur adaptée pour permettre l'insertion du rideau 17 dans les glissières 23, 24 de la garniture 16. Avantageusement, la garniture 16 comprend des bouches d'insertion 31, 32 formées à l'extrémité - ici inférieure - de chaque glissière 23, 24, et, dans le cas de l'invention, avant l'élément de blocage 25 pour la première glissière 23 de la garniture 16.

Avantageusement, le corps 35 comprend (voir toujours figure 9) sur ses deux grands côtés (longs bords parallèles aux glissières) des éléments de centrages 40 (ici au nombre de 4) qui viennent de formation avec le corps 35 et sont logés dans des encoches de celui-ci. Ces éléments de centrages 40 sont flexibles par rapport au corps 35 et sont adaptés à frotter ou à appuyer sur les bords latéraux intérieurs (jambes des « *L* ») des glissières 23, 24 pour permettre le centrage du rideau 17 lors de son insertion dans la garniture 16.

Avantageusement encore, le corps 35 possède également des bosses 41 (ici au nombre de 8) qui viennent également de formation avec le corps 35 et qui s'élèvent depuis la face arrière 27 du corps 35, au niveau de ses deux grands côtés. Ces bosses 41 sont conformées pour permettre, lors du montage du rideau 17 avec la garniture 16, de plaquer légèrement la face avant 26 du corps 35 contre la face arrière 19 de la garniture 16. Après montage, les bosses 41 peuvent également servir, si elles sont relativement flexibles, à amortir les éventuelles vibrations du rideau 17 contre la garniture 16, de manière à limiter la génération de bruits parasites désagréables dans le véhicule.

Dans l'exemple de réalisation représenté sur les figures, le corps 35 du rideau 17 présente une longueur d'environ 215 millimètres et une largeur d'environ 50 millimètres.

L'inscription « *UP* » et la flèche orientée qui sont visibles sur la figure 9 et qui sont gravées sur la face arrière 27 du corps 35 indiquent la partie supérieure du rideau 17, c'est-à-dire celle qui est destinée à être la plus proche du toit du véhicule, et le sens de montage dans lequel le rideau 17 doit être inséré dans les glissières 23, 24 de la garniture 16 par un opérateur avant le montage de l'ensemble 5 sur le pied milieu.

Une fois montée avec la garniture 16 (*i.e.* insérée dans les glissières 23, 24), la face avant 26 du rideau 17 est essentiellement en regard avec la face arrière 19 de la garniture 16, sauf au niveau de son ouverture 22 où la face avant 26 est alors en regard avec l'intérieur de l'habitacle du véhicule (voir par exemple figures 4 et 6). C'est d'ailleurs grâce à l'ouverture 28 du rideau 17 et à l'ouverture 22 de la garniture 16 que, l'ensemble 5 une fois monté sur le pied milieu, le chariot 13, monté sur le rail 12, reste accessible pour la fixation du bloc-ceinture 6 sur le chariot 13.

La face arrière 27 du rideau 17 est, quant à elle, tournée vers le pied milieu, comme la face arrière 19 de la garniture 16 (voir figures 3, 5 ou 7).

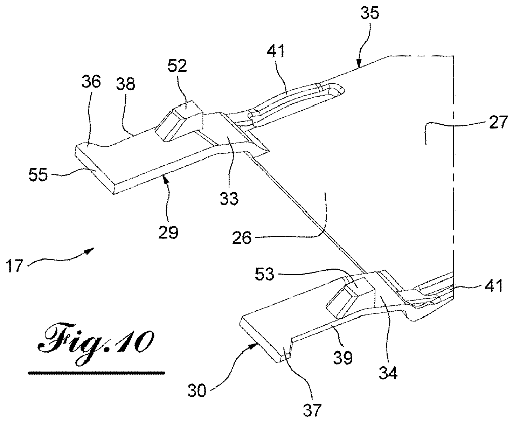

Tel qu'illustré sur les figures 9 et 10, le rideau 17 comprend également deux pattes, ou languettes 29, 30, qui sont également des éléments essentiels de l'invention et qui seront décrites très en détail dans la suite de la description avec les figures 12 à 22.

On remarquera néanmoins que ces languettes 29, 30 s'étendent ici depuis le petit côté (largeur ou bord court) inférieur du corps 35 du rideau 17, et présentent des bords externes 38, 39 qui sont dans le prolongement (en vue de dessus de la figure 10) des grands côtés (longueur ou long bord) du corps 35 (les grands côtés correspondent aux bords externes du corps qui sont situés près des glissières 23, 24).

Comme le montre plus en détail la figures 10, les languettes 29, 30 viennent de formation avec le corps 35 du rideau 17 et s'élèvent depuis la face arrière 27 du rideau 17 au travers de portions courbées 33, 34 entre elles et le corps 35 du rideau 17.

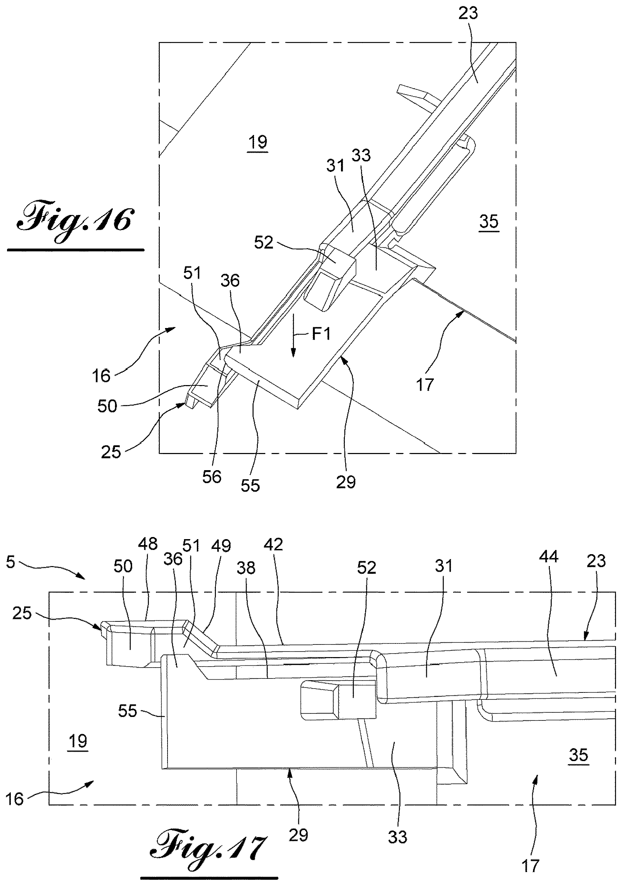

Lorsque le rideau 17 est libre et non inséré dans les glissières 23, 24 de la garniture 16 (cas des figures 16 à 19 par exemple), ces languettes 29, 30 du rideau 17 sont alors dans un plan qui est décalé (« au-dessus » sur les figures) par rapport au plan du corps 35 du rideau 17 (*i.e.* de sa face arrière 27) et qui est sensiblement parallèle à la face arrière 27.

Par ailleurs, lorsque le rideau 17 est inséré dans les glissières 23, 24 de la garniture 16 en position haute, ses portions courbées 33, 34 viennent se loger juste en-dessous des plans inclinés 31, 32 de chaque glissière 23, 24.

Dans l'exemple de réalisation présenté ici, les languettes 29, 30 du rideau 17 ont une forme sensiblement rectangulaire et présentent une longueur d'environ 20 millimètres et une largeur d'environ 5 millimètres.

Le rideau 17 est généralement une pièce plastique, par exemple en polypropylène, et présente ici une épaisseur sensiblement constante, par exemple comprise entre 1 et 2 millimètres. Cette épaisseur, relativement faible, confère une certaine souplesse au rideau 17, et en particulier au niveau des portions courbées 33, 34 qui peuvent se déformer de manière élastique, de sorte que les languettes 29, 30 peuvent être pliées (flexion vers le haut ou vers le bas) ou tordues (torsion vers l'intérieur ou l'extérieur) lors de la manipulation du rideau 17, par exemple lorsqu'un opérateur monte le rideau 17 sur la garniture 16 pour former l'ensemble 5 de pied milieu.

En pratique, lorsque l'ensemble 5 de pied milieu est fourni à un constructeur automobile pour être monté sur la carrosserie d'un véhicule, le rideau 17 est bloqué en position dans la garniture 16, cette position étant appelée « *position de livraison* » par la suite. Cette position de livraison du rideau 17 dans l'ensemble 5, et plus particulièrement par rapport à la garniture 16 de pied milieu, est déterminée préalablement par le constructeur du véhicule de sorte que, lors du montage de cet ensemble 5 sur le pied milieu, l'ouverture 22 de la garniture 16 et l'ouverture 28 du rideau 17 soient positionnées en face du chariot 13 fixé sur le rail 12 de pied milieu (voir ci-dessus).

C'est l'un des objectifs de l'invention que de garantir que le rideau 17 est bloqué dans la position de livraison pour le montage de l'ensemble 5 sur le pied milieu, avant toute utilisation du bloc-ceinture 6 par le conducteur (ou le passager). On décrira précisément dans la suite comment parvenir à ce blocage du rideau 17 en position de livraison dans la garniture 16.

Par ailleurs, on observera que le constructeur du véhicule peut décider, selon ses contraintes industrielles propres, si la position du chariot 13 sur le rail 12 correspond à une position du mécanisme de réglage 11 qui est une position haute ou basse. Toutefois, le mécanisme de réglage 11 lors de la sortie du véhicule de la chaîne d'assemblage est souvent en position haute. Sans que cela ne soit limitatif, l'invention décrite ci-après correspond à ce cas particulier de livraison de l'ensemble 5 de pied milieu en position haute.

Ainsi, lors de l'assemblage du véhicule, on vient fixer l'ensemble 5 de pied milieu sur le pied milieu correspondant (conducteur ou passager) avec la garniture 16 munie de son rideau 17 bloqué en position de livraison, ici en position haute (cas des figures 4 et 5). Comme le rideau 17 est bloqué dans la position de livraison (haute) demandée par le constructeur, l'ouverture 28 du rideau 17 (comme d'ailleurs l'ouverture 22 de la garniture 16) se retrouve exactement face au chariot 13 mobile (préalablement monté sur le rail 12 en position haute) du mécanisme de réglage 11 si bien que la fixation de l'ensemble 5 sur le pied milieu est possible, le chariot 13 dépassant alors de l'ouverture 28 après montage dans l'habitacle. On peut ensuite visser la boucle de renvoi 9 de la ceinture 10 sur le chariot 13. Puis on clipse le bouton de réglage 7 sur le chariot 13 et enfin on termine en installant l'enjoliveur 8 sur le bouton de réglage 7 de manière à cacher la vis de fixation de la boucle de renvoi 9. On arrive ainsi à la configuration représentée sur la figure 1 précédemment décrite.

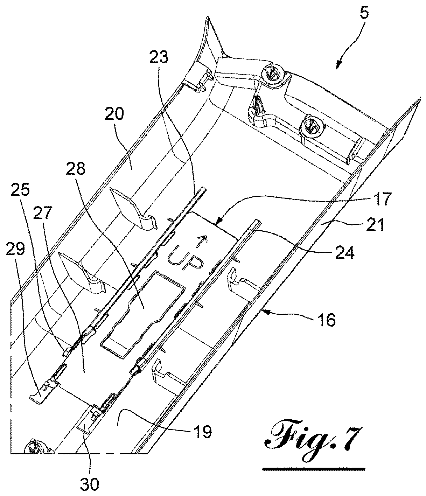

Le bloc-ceinture 6 est alors prêt à l'emploi et le conducteur peut utiliser la ceinture 10 et régler éventuellement sa hauteur grâce à l'actionnement du mécanisme de réglage 11 par pression sur le bouton de réglage 7. S'il effectue ce réglage, par exemple s'il passe d'une position haute (*i.e.* position de livraison) à une position basse, il va alors *« débloquer »* le rideau 17 de sa position de livraison (on verra comment dans la suite) de sorte que celui-ci va pouvoir glisser le long des glissières 23, 24 de la garniture 16 de pied milieu. Ainsi, lors du déplacement du chariot 13 mobile sur le rail 12 par le conducteur, le chariot 13, qui dépasse de l'ouverture 28 du rideau 17, va entraîner dans son mouvement le rideau 17 de réglage ceinture qui passe alors en position basse (cas des figures 6 et 7 où le mécanisme de réglage n'est pas visible).

On notera par ailleurs à ce stade que, dans le mode de réalisation présenté ici, le rideau 17 de réglage ceinture a deux languettes 29, 30 (voir par exemple figures 9 et 10).

En effet, les deux pièces de garniture pour pied milieu gauche (côté conducteur) et droit (côté passager) sont en pratique symétriques l'une avec l'autre par rapport à un plan (vertical). Elles sont en fait l'image l'une de l'autre dans un miroir, comme deux mains ou deux molécules énantiomères. Dans le cas présent, et comme décrit plus haut, la garniture 16, qui est destinée ici à être fixé sur le pied milieu gauche, comporte, sur sa face arrière 19, une première glissière 23 qui est située vers l'avant (capot) du véhicule et une deuxième glissière 24 qui est située vers l'arrière (coffre) du véhicule. L'élément de blocage 25 qui vient dans le prolongement de la première glissière 23 est donc lui aussi située vers l'avant. Par symétrie dans un miroir, dans la garniture pour le pied milieu droit, la première glissière et l'élément de blocage sont donc eux aussi située vers l'avant du véhicule.

Ainsi, pour n'avoir qu'une seule pièce de rideau à fabriquer et qu'une seule référence à gérer sur la chaîne de fabrication, cette pièce pouvant être utilisée aussi bien pour une garniture de pied milieu gauche que pour une garniture de pied milieu droit, le rideau 17 comporte deux languettes 29, 30 sur chaque côté de sorte qu'il peut être monté dans une garniture 16 de pied milieu gauche (cas présenté ici) ou dans une garniture de pied milieu droit. Dans l'exemple de réalisation illustré ici, c'est la première languette 29 du rideau 17 qui est fonctionnelle dans la garniture 16 de pied milieu (gauche). Ce même rideau 17, avec ses deux languettes 29, 30, peut donc aussi être utilisé dans la garniture de pied milieu droit du même véhicule : dans ce cas, ce sera la deuxième languette 30 située de l'autre côté qui sera fonctionnelle.

On pourrait aussi utiliser un rideau ne comprenant qu'une seule languette si les garnitures de pied milieu droit et gauche n'étaient pas symétriques l'une avec l'autre.

Une autre possibilité pourrait être d'avoir des garnitures de pied milieu (gauche ou droit) où chaque glissière en face arrière se prolonge avec un élément de blocage. Dans ce cas, il serait alors possible d'utiliser un rideau de réglage avec une seule languette, cette languette coopérant avec l'élément de blocage le plus proche pour bloquer le rideau.

En tout état de cause, dans la présente invention, un rideau 17 de réglage ceinture comprenant une seule languette 29 et une garniture 16 de pied milieu comprenant un seul élément de blocage 25 sont suffisants pour réaliser la fonction de blocage du rideau 17 en position de livraison dans l'ensemble 5 de pied milieu.

On va maintenant décrire plus en détail l'invention en référence aux figures 10 à 21. On va en particulier expliquer comment la première languette 29 et la seconde languette 30 du rideau 17 coopèrent avec les glissières 23, 24 de la garniture 16 et surtout avec l'élément de blocage 25 pour permettre de bloquer le rideau 17 en position de livraison dans la garniture 16 et faciliter ainsi le montage de l'ensemble 5 de pied milieu sur la carrosserie du véhicule, notamment avec le mécanisme de réglage 11 ceinture.

À cet effet, comme le montrent plus particulièrement les figures 10, 16 et 17, chaque languette 29, 30 comprend un ergot 36, 37, qui s'étend depuis le bord externe 38, 39 correspondant de la languette 29, 30 vers l'extérieur.

Ces ergots 36, 37 présentent ici une forme sensiblement trapézoïdale, avec des petits côtés de trapèze, ou « *pointes* » (non référencées sur les figures), qui sont donc tournées vers l'extérieur. En variante, les ergots peuvent présenter une forme triangulaire.

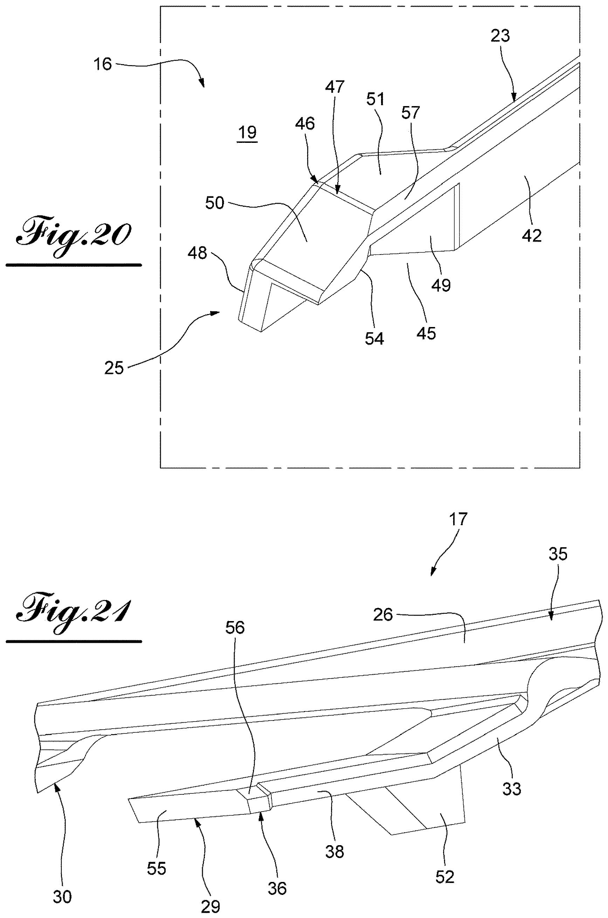

Par ailleurs, comme le montre la figure 20, l'élément de blocage 25, qui est situé sur la face arrière 19 de la garniture 16, ici dans le prolongement de la première glissière 23 (voir figure 8), forme une cavité 45 destinée à accueillir l'ergot 36 de la première languette 29 de manière à le bloquer en position et ainsi maintenir le rideau 17 en position de livraison (on verra comment dans la suite).

Cette cavité 45 d'accueil est ouverte d'une part vers l'intérieur, c'est-à-dire la partie centrale de la garniture 16, et d'autre part vers la partie basse de la garniture 16. On verra que ces deux ouvertures sont importantes respectivement pour le blocage du rideau en position de livraison et pour son déblocage et son passage en position d'utilisation.

Comme le montre bien la figure 20, la cavité 45 est délimitée, d'une part, par une première paroi 46 s'élevant depuis la face arrière 19 de la garniture 16 entre un bord proximal et un bord distal et, d'autre part, par une deuxième paroi 47 s'étendant, depuis le bord distal de la première paroi 46, vers la partie centrale de la garniture 16, c'est-à-dire vers l'intérieur.

Dans l'exemple présenté sur les figures 17 et 20, on observe que la première paroi 46 est formée de deux portions de surface plane : une première face 48 et une deuxième face 49 qui sont toutes les deux sensiblement de même hauteur que le premier mur 42 de la première glissière 23. La première face 48 est ici légèrement inclinée vers l'intérieur (la première face 48 n'est donc pas ici perpendiculaire à la face arrière 19) et son bord distal, qui se confond avec une partie du bord distal de la première paroi 46, présente un profil à deux segments droits : un premier segment parallèle à la face arrière 19 et un deuxième segment incliné vers cette même face arrière 19. La deuxième face 48 de la première paroi 46 forme un coude et raccorde le premier mur 42 avec la première face 48.

On notera toutefois que dans l'invention il n'est pas nécessaire que l'élément de blocage soit formé dans le prolongement de la première glissière. En effet, cet élément de blocage pourrait être formé sur la face arrière de la garniture mais être complètement séparé de la première glissière.

La deuxième paroi 47 est également formée de deux portions de surface plane : une rampe 50 sensiblement rectangulaire et un palier 51 de forme trapézoïdale. La rampe 50 s'étend vers l'intérieur depuis un bord commun avec le deuxième segment incliné de la première face 48 de sorte que comme ce deuxième segment, la rampe 50 est inclinée vers la face arrière 19 de la garniture 16. Le palier 51, quant à lui, s'étend vers l'intérieur, et a pour bord le premier segment de la première face 48 et le bord distal de la deuxième face 49 (coude) qui se confond d'ailleurs avec une partie du bord distal de la première paroi 46.

On va maintenant décrire comment installer le rideau 17 dans la garniture 16 et le bloquer en position de livraison (qui est ici une position haute) grâce à la languette 29 et à l'élément de blocage 25.

Tout d'abord, un opérateur de montage (ou bien un robot automatisé) prend le rideau 17 de sorte que sa face arrière 27 portant l'inscription « *UP »* et la gravure avec la flèche (voir ci-dessus et figure 9) soit face à lui. Puis, il insère le rideau 17 dans les glissières 23, 24 *via* leurs plans inclinés 31, 32, cette insertion se faisant en mettant en premier le bord d'attaque du corps 35 qui est le bord qui est le plus proche de la flèche gravée sur sa face arrière 27. Le rideau 17, grâce à la souplesse de son corps 35 (épaisseur faible), aux éléments de centrage 40 et aux bosses 41, coulisse alors facilement à l'intérieur des glissières 23, 24.

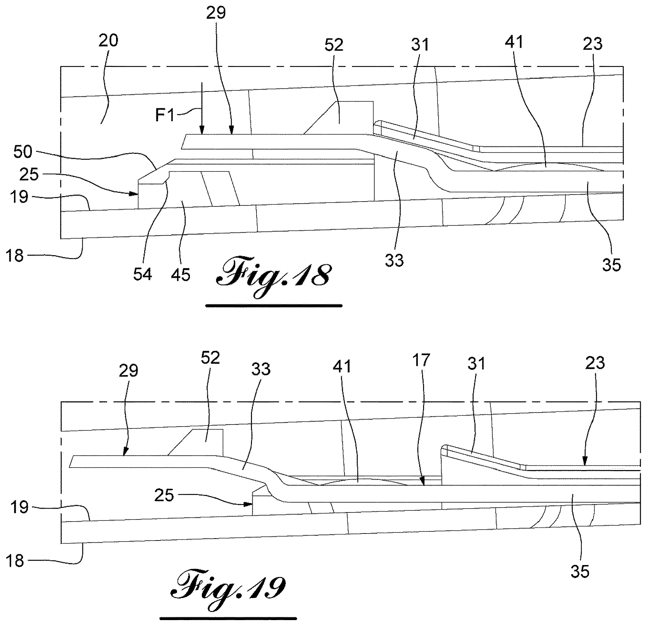

La figure 7 illustre le rideau 17 après son introduction par l'opérateur lorsqu'il a coulissé et est arrivé à sa position basse de réglage. Si l'opérateur continue de glisser le corps 35 dans les glissières 23, 24, on arrive à la situation représentée sur la figure 19 où le rideau 17 est en position de réglage intermédiaire (seule la première languette 29 est représentée sur cette figure, mais la deuxième languette 30 est dans la même situation).

On remarque alors que la languette 29, parce qu'elle est formée dans le prolongement de la portion courbée 33 du rideau 17, est située dans un plan qui est au-dessus de l'élément de blocage 25 de la garniture 16 (en particulier de sa deuxième paroi 47) et au-dessus du mur 42 de la première glissière 23. Ainsi, ni la languette 29, ni d'ailleurs son ergot 36, n'entrave la translation du rideau 17 et n'empêche l'opérateur de continuer à insérer le rideau 17 (en fait son corps 35) dans les glissières 23, 24. On arrive alors à la situation représentée sur les figures 16, 17 et 18.

On voit sur ces figures et sur la figure 10 que le rideau 17 comprend avantageusement deux butées 52, 53 qui viennent ici de formation avec le rideau 17 et qui s'élèvent en s'éloignant de la face arrière 27 du rideau 17.

Ces deux butées 52, 53 sont disposées sur le rideau 17 de manière à référencer l'une des positions extrêmes du rideau 17 par rapport à la garniture 16. Dans l'exemple de réalisation présenté, il s'agit de la position haute de réglage ceinture du rideau 17 dans les glissières 23, 24 de la garniture 16. Étant données les dimensions respectives des différents éléments, les butées 52, 53 sont ici à cheval sur les languettes 29, 30 et les portions courbées 33, 34 du rideau 17. Cependant, en variante, dans d'autres configurations, les butées pourraient être sur une autre partie du rideau, par exemple intégralement sur ses languettes ou sur ses portions courbées, ou bien encore sur son corps.

Les deux butées 52, 53 présentent une hauteur, *i.e.* une dimension selon une direction perpendiculaire à la face arrière 27 du corps 35, qui est prédéterminée de sorte que les butées 52, 53 viennent en butée sur les plans inclinés 31, 32 de chaque glissière 23, 24 pour arrêter le coulissement du rideau 17 dans ces glissières 23, 24 lorsqu'il arrive dans sa position haute. On arrive alors à la configuration illustrée sur les figures 5, 16 et 17.

À ce moment-là, le rideau 17 de réglage ceinture est donc dans sa position haute de réglage qui est ici la position de réglage ceinture. Cependant, le rideau 17 n'est pas encore complètement bloqué dans cette position, l'opérateur pouvant à tout moment retirer le rideau 17 de la garniture 16 en le tirant et en le faisant coulisser le long des glissières 23, 24. D'ailleurs, c'est habituellement ce qu'il fait préalablement au blocage du rideau 17 en position de livraison pour contrôler son glissement dans la garniture 16 et s'assurer que le mécanisme de réglage 11 ceinture pourra facilement être manipulé par le conducteur.

On va maintenant décrire comment l'opérateur peut bloquer le rideau 17 de réglage ceinture en position de livraison dans la garniture 16 et, surtout comment cela est rendu possible grâce à l'invention.

On part donc de la configuration illustrée sur les figures 16 et 17 où le rideau 17 est dans sa position de réglage haute dans la garniture 16, avec les butées 52, 53 qui viennent respectivement taper sur les plans inclinés 31, 32 des glissières 23, 24. À partir de cette configuration, l'opérateur (ou le robot automatisé) exerce alors une pression ou force **F1** (voir référence sur les figures 16 et 18) sur la languette 29, sensiblement perpendiculairement à celle-ci, en direction de la face arrière 17 de la garniture 16. Pour plus d'efficacité, la force **F1** est appliquée de préférence au niveau d'un point de pression situé vers l'extrémité libre 55 de la languette 29 et dans une partie relativement centrale de celle-ci.

En effet, sous l'effet de la force **F1** appliquée sur la languette 29 par l'opérateur, celle-ci va d'abord se plier par torsion de la portion courbée 33 du rideau 17(qui est élastiquement déformable) autour d'un premier axe de torsion sensiblement parallèle à la face arrière 17 de la garniture 16 (ou à la face arrière 27 du corps 35) de sorte que l'ergot 36 de la languette 29 va venir se poser et buter sur le palier 51 de l'élément de blocage 25. Ensuite, si la force **F1** est maintenue, à cause du palier 51, la languette 29 va alors tourner vers l'intérieur par torsion de la portion courbée 33 autour d'un deuxième axe de torsion perpendiculaire au premier axe de torsion mais toujours sensiblement parallèle à la face arrière 17. L'ergot 36 de la première languette 29 va donc pouvoir « passer » le palier 51 lorsque, de manière élastique, la languette 29 va tourner naturellement dans l'autre sens selon le deuxième axe de torsion. À ce moment-là, l'application de la force **F1** par l'opérateur peut s'arrêter. On arrive alors à la situation représentée sur les figures 11, 12 et 13 où l'ergot 36 de la languette 29 est logé à l'intérieur de la cavité 45 de l'élément de blocage 25.

Avantageusement, l'ergot 36 de la languette 29 comprend à sa pointe un chanfrein 56 adaptée à faciliter le passage du palier 51 lors de l'application de la force **F1** par l'opérateur. Avantageusement encore, on peut prévoir également un chanfrein ou arrondi 57 au niveau du bord intérieur du palier 51, cet arrondi pouvant coopérer avec le chanfrein 56 de l'ergot 36 pour rendre encore plus facile le passage de l'ergot 36 dans la cavité 45. Cependant, ni le chanfrein 56 de l'ergot 36, ni l'arrondi 57 du palier 51 ne permette - en eux-mêmes - le passage accidentel de l'ergot 36 au-delà du palier 51, sans l'application d'une force **F1** par l'opérateur ou le robot.

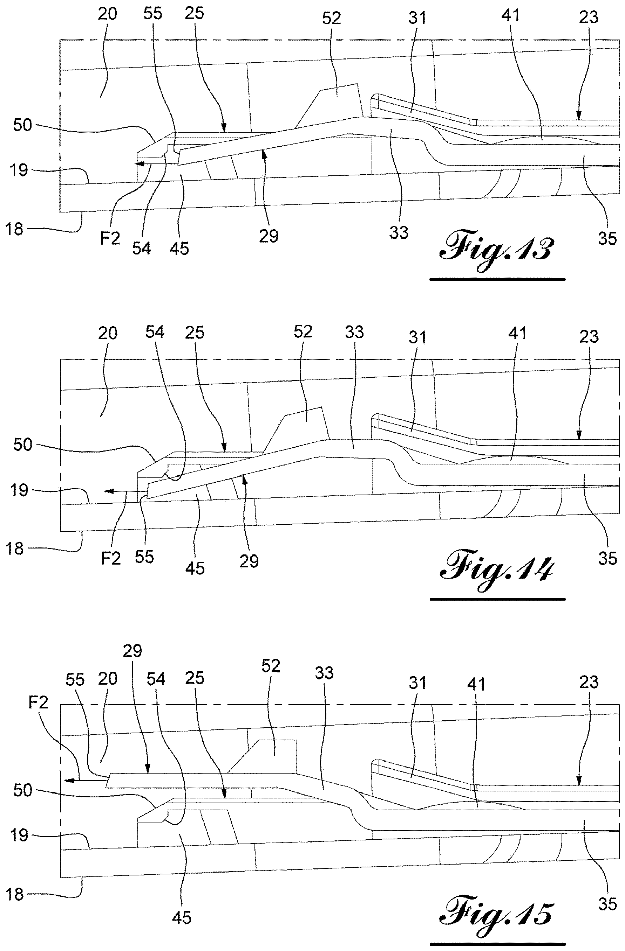

On notera que, dans cette situation où la force **F1** a cessé d'être appliquée, la languette 29 reste malgré tout pliée par rapport au corps 35 du rideau 17 puisque l'ergot 36 est bloqué dans la cavité 45. Dans cette position (voir notamment figure 13) qui est différente de la position de repos de la languette 29 (voir figure 10), à cause de la torsion au niveau de la première portion courbée 31, la languette 29 a tendance à « vouloir » remonter par effet de rappel vers sa position de repos, de sorte que l'ergot 36 est plaqué contre la deuxième paroi 47 de la cavité 45.

Comme le montrent les figures 11 et 13, après passage du palier 51 par l'ergot 36 et retenue de celui-ci dans la cavité 45, l'extrémité libre 55 de la languette 29 au niveau de son ergot 36 se trouve en regard d'un bourrelet 54 situé dans la cavité 45 de l'élément de blocage 25, sous la rampe 50. En conséquence, si le rideau 17 descend un peu dans les glissières 23, 24 (avec l'orientation de la figure 13, cela se traduit par une translation vers la gauche de la languette 29 par rapport à l'élément de blocage 25) depuis sa position haute, l'extrémité libre 55 de la languette 29 (au niveau de son ergot 36) va venir buter contre ce bourrelet 54, empêchant le rideau 17 de continuer à descendre. Le rideau 17 est donc bloqué dans sa position de livraison par rapport à la garniture 16.

C'est grâce à la force de rappel sur la languette 29 et grâce à la butée de son ergot 36 contre le bourrelet 54 de la cavité 45 qu'un « *point dur* » peut être formé (on pourrait dire « *enclenché* » ou « *embrayé* ») de manière à garantir le maintien en position de livraison du rideau 17, ici correspondant à la position haute du mécanisme de réglage 11 ceinture (voir explications ci-dessus).

En d'autres termes, la languette 29 du rideau 17, en particulier son ergot 36 et son extrémité libre 55, et également l'élément de blocage 25 de la garniture 16, avec le bourrelet 54 dans sa cavité 45, sont conformés et configurés pour que le point dur soit justement suffisamment dur, c'est-à-dire pour que l'effort ou la force nécessaire pour le surmonter et donc libérer et faire sortir l'ergot 36 de la cavité 45, est suffisamment important pour que le rideau 17 ne puisse pas *a priori* sortir de sa position de livraison accidentellement, en particulier lors de la manipulation de l'ensemble 5 de pied milieu par l'opérateur ou par le robot, avec le rideau 17 monté dans la garniture 16, avant, pendant ou après son montage sur le pied milieu du véhicule.

Plus précisément, le bourrelet 54 de l'élément de blocage 25 est conformé pour, lorsque qu'une force d'actionnement est appliquée sur le rideau 17 avec une intensité supérieure à une intensité de libération prédéterminée, permettre le désengagement ou le *« débrayage* » du rideau 17 de la garniture 16. Cette force d'actionnement, notée **F2** par la suite (voir figures 12 et 13), s'exerce selon une direction sensiblement parallèle au corps 35 et à la face arrière 19 de la garniture 16, dans un sens tendant à faire passer le rideau 17 dans une autre position de réglage.

La force d'actionnement **F2** résulte de la force appliquée sur le rideau 17 lors de l'actionnement du mécanisme de réglage 11 ceinture par le conducteur, par exemple pour le faire passer en position basse ou en position intermédiaire de réglage. En effet, comme expliqué plus haut, puisque le chariot 13 du mécanisme de réglage 11 fait saillie au travers de l'ouverture 22 de la garniture 16 et en même temps de l'ouverture 28 du rideau 17, il entraîne celui-ci en translation lorsque le conducteur veut le faire coulisser sur le rail 12 par actionnement du mécanisme de réglage 11 pour régler la hauteur du bloc-ceinture 6.

Comme expliqué ci-dessus, l'intensité de libération est prédéterminée de manière à éviter les débrayages accidentels du rideau 17.

De plus, l'intensité de libération est également prédéterminée de manière à ne pas gêner ou empêcher le réglage de la position du bloc-ceinture 6 par le conducteur.

À cet effet, le bourrelet 54 présente de préférence une forme adaptée pour autoriser la sortie de l'ergot 36 de la languette 29 de la cavité 45 de l'élément de blocage 25 lorsque la force d'actionnement **F2** d'intensité suffisante est appliquée sur le rideau 17.

Dans l'exemple de réalisation présenté et illustré sur les figures 13 à 15, il est ici avantageusement prévu un chanfrein sur le bourrelet 54. En variante, le bourrelet peut présenter une forme arrondie, avec une courbure adaptée.

Par ailleurs, l'extrémité libre 55 de la languette 29 est de préférence conformée de manière à faciliter le passage du bourrelet 54 (*i.e.* à rendre le point dur « moins dur ») par l'extrémité libre 55 au niveau de l'ergot 36 de la languette 29.

Par exemple, comme le montrent encore les figure 13 à 15, l'extrémité libre 55 de la languette 29 est avantageusement biseautée, ici sur toute sa largeur. En variante, seule la partie de l'extrémité libre au niveau de l'ergot pourrait être biseautée.

Ainsi conformés, le bourrelet 54 dans la cavité 45 avec son chanfrein et l'extrémité libre 55 de la languette 29 avec son biseau favorisent la sortie de l'ergot 36 de la cavité 45 et donc facilitent la libération du rideau 17 de sa position de livraison dans la garniture 16.

On notera que l'on peut jouer indépendamment sur la forme du bourrelet 54 et sur la forme de l'extrémité libre 55 de la languette 29. C'est la combinaison des deux formes qui permet de régler finement l'intensité de libération précédemment évoquée.

On va maintenant décrire en référence aux figures 13 à 15 comment s'effectue cette sortie de l'ergot 36 de la cavité 45.

Comme décrit ci-dessus, sur la figure 13, lorsque la languette 29 est enclenchée en position de livraison, l'ergot 36 de la languette 29 est plaqué contre la face du palier 51 qui est orientée vers l'intérieur de la cavité 45. Ce plaquage peut être d'ailleurs suffisamment fort pour que cela retienne le rideau 17 dans sa position de livraison.

Dans cette situation, l'extrémité libre 55 de la languette 29, au niveau de son ergot 36, est alors en butée avec le bourrelet 54 de l'élément de blocage 25. Sur la figure 13, un jeu fonctionnel a été inséré sur la figure pour un souci d'intelligibilité et pour pouvoir placer les références : l'extrémité libre 55 de la languette 29 est ainsi montrée non en butée contre le bourrelet 54 mais seulement en regard de celui-ci.

Lors du tout premier actionnement du mécanisme de réglage 11 ceinture par le conducteur, il résulte une force d'actionnement **F2** (voir toujours figure 13) appliquée sur le rideau 17 qui se translate, de sorte que l'extrémité libre 55 vient au contact et en butée du bourrelet 54. La forme (ici biseau) de l'extrémité libre 55 et la forme (ici chanfrein) du bourrelet 54 font que si la force d'actionnement **F2** est suffisamment intense alors l'extrémité libre 55 va frotter contre le bourrelet 54 et suivre son profil. En conséquence, grâce une nouvelle fois à la souplesse de la première portion courbée 33 du rideau 17, la languette 29 va se tordre encore plus de manière à se rapprocher de la face arrière 19 de la garniture 16 (avec l'orientation de la figure 13, cela correspond à un abaissement de la languette 29). Ensuite, si la force d'actionnement **F2** est maintenue (*i.e.* le conducteur continue de faire coulisser le chariot 13 en voulant changer de position de réglage) et si la languette 29 se plie suffisamment, alors l'ergot 36 va passer complètement sous le bourrelet 54 (cas de la figure 14) puis sortir complètement de la cavité 45. Une fois l'ergot 36 sorti, la languette 29 se trouve libérée et se déplie dans l'autre sens (en s'éloignant de la face arrière 19) pour revenir à sa position de repos à cause de la torsion de rappel de la première portion courbée 33 qui est relativement élastique. On arrive alors à la configuration représentée sur la figure 15. Enfin, si la force d'actionnement **F2** est toujours maintenue dans le même sens, alors le rideau 17, libre de coulisser dans les glissières 23, 24 de la garniture 16, se retrouve par exemple dans la configuration représentée sur la figure 19 qui correspond à la position intermédiaire de réglage ceinture.

L'un des avantages de l'invention est que, une fois désengagé de sa position de livraison après le premier actionnement du mécanisme de réglage 11 par le conducteur, le rideau 17 est libre de coulisser dans les glissières 23, 24 de la garniture 16 entre les différentes positions d'usage de la ceinture (ici les trois positions haute, basse et intermédiaire), sans réenclencher le point dur de livraison qui n'est donc *a priori* opérationnel qu'une seule fois, *i.e.* à usage unique, une fois que l'ensemble 5 est monté sur le pied milieu. Par ailleurs, lors de la première opération de déblocage et de translation du rideau 17 depuis sa position de livraison initiale, les languettes 29, 30 restent attachées au corps 35 via les portions courbées 33, 34 sans entraver le coulissement du rideau 17 par rapport à la garniture 16 et ne risquent donc pas de générer des bruits parasites en se perdant dans l'ensemble 5 de pied milieu.

Ainsi, en partant de la configuration de la figure 19, si le conducteur continue d'agir toujours dans le même sens (vers la gauche sur la figure) sur le mécanisme de réglage 11 voulant placer le bloc-ceinture en position basse de réglage (voir boucle de renvoi 9B de la figure 1), le rideau 17 peut alors passer en position basse de réglage (voir figure 7).

En revanche, si le conducteur actionne, à partir de la configuration de la figure 19, le mécanisme de réglage 11 dans l'autre sens (vers la droite sur la figure), alors le rideau 17 n'enclenche pas à nouveau le point dur et repasse en position haute de réglage (voir figures 16 à 18) dans laquelle les butées 52, 53 sont en contact avec les plans inclinés 31, 32 des glissières 23, 24 (seule la première butée 52 est visible sur ces figures) et dans laquelle l'ergot 36 de la languette 29 est en regard du palier 51 de l'élément de blocage 25.

Enfin, on notera toutefois que si le rideau 17 reste bloqué dans sa position de livraison trop longtemps, par exemple parce que le moment où le point dur de livraison est enclenché et le moment où le mécanisme de réglage 11 est actionné pour la première fois (faisant ainsi sauter le point dur) par le conducteur sont très éloignés dans le temps, alors il y a un risque que la première portion courbée 33 du rideau 17 reliant le corps 35 à la languette 29 reste tordue et déformée de manière prolongée par manque d'élasticité. Ainsi, il se peut que lors de la sortie de l'ergot 36 de la cavité 45 (voir figure 14) la languette 29 du rideau 17 ne retrouve pas sa configuration initiale (voir figure 15) mais au contraire reste pliée vers la face arrière 19 de la garniture 16, par exemple dans une configuration intermédiaire entre celle de la figure 13 (ergot 36 bloqué dans la cavité 45) et celle de la figure 15 (languette 29 dans sa position naturelle, aucune perte d'élasticité au niveau de la portion courbée 33).

Dans ce cas, si après libération du rideau 17 de sa position de livraison (ergot 36 sorti de la cavité 45 mais languette 29 encore partiellement pliée) le conducteur actionne le rideau 17 de manière à le faire passer dans sa position haute de réglage (translation du rideau 17 vers la droite sur la figure 15), alors l'ergot 36 va venir glisser contre la rampe 50 de l'élément de blocage 25 de sorte que la languette 29 se redéplie et n'empêche pas le mouvement du rideau 17 vers sa position finale représentée sur les figures 16 et 17.

La présente invention n'est nullement limitée au mode de réalisation décrit et représenté sur les figures, mais l'homme du métier saura y apporter toute variante conforme à l'invention.

En particulier, dans le cas particulier où la position de livraison du rideau dans la garniture correspond à une position basse de réglage du mécanisme de réglage, l'invention fonctionne de la même manière en combinant un élément de blocage situé dans le prolongement supérieur d'une glissière, vers la partie haute de la garniture, c'est-à-dire vers le toit du véhicule, avec une languette s'étendant depuis le bord (petit côté) supérieur du rideau près de la partie haute de la garniture. Dans ce cas, les plans inclinés des glissières se trouvent également dans la partie supérieure des glissières et le montage du rideau dans la garniture se fait par son côté inférieur (pouvant par exemple porter une inscription *« DOWN »* et une flèche orientée vers les bas) et le faisant coulisser vers le bas dans les glissières. Ensuite, le fonctionnement des languettes avec leurs ergots avec le ou les éléments de blocage est complètement identique à celui décrit précédemment.

## Revendications

1. Pré-équipement (5) pour un pied milieu d'un véhicule automobile comportant :
- une garniture (16) de pied milieu comprenant un système de glissières (23, 24) rectilignes ; et
- un rideau (17) de réglage ceinture comprenant :
- un corps (35) plan de forme sensiblement rectangulaire avec deux premiers côtés et deux deuxièmes côtés, ledit corps (35) étant adapté à coulisser selon ses premiers côtés le long desdites glissières (23, 24) ; et
- au moins une première languette (29) plane s'étendant dans le prolongement d'un premier côté dudit corps (35) depuis un deuxième côté dudit corps (35), ladite languette (29) étant élastiquement flexible par rapport audit corps (35) selon un axe de flexion parallèle audit deuxième côté,
ladite garniture (16) comprenant un élément de retenue (25) décalé transversalement par rapport à une première glissière (23) et formant une cavité (45),
ladite première languette (29) comprenant un ergot (36) situé à distance dudit axe de flexion, ledit ergot (36) venant de formation avec ladite première languette (29) et faisant saillie transversalement vers l'extérieur,
ledit ergot (36) étant adapté à surmonter ledit élément de retenue (25) par application d'une première force (**F1**) perpendiculairement à ladite première languette (29) à distance dudit axe de flexion et dudit ergot (36) dans le sens de la largeur de ladite première languette (29) et torsion élastique de la première languette (29) autour d'un axe de torsion sensiblement perpendiculaire audit axe de flexion, et à s'insérer dans ladite cavité (45) pour y être retenu et immobiliser ledit rideau (17) par rapport à ladite garniture (16) dans une position de livraison.

2. Pré-équipement (5) selon la revendication 1, dans lequel ledit ergot (36) présente une extrémité libre (55) qui coopère avec un bourrelet (54) de ladite cavité (45) pour, lors de l'application d'une deuxième force (**F2**) sur le rideau (17) sensiblement parallèlement audit corps (35), fléchir ladite première languette (29) et guider ledit ergot (36) vers sa désinsertion de ladite cavité (45).

3. Pré-équipement (5) selon la revendication 2, dans lequel ladite extrémité libre (55) est biseautée et ledit bourrelet (54) est chanfreiné.

4. Pré-équipement (5) selon l'une des revendications 1 à 3, dans lequel ladite garniture (16) et ledit rideau (17) sont des pièces en plastique moulé.

5. Pré-équipement (5) selon la revendication 4, dans lequel ledit plastique moulé est un polypropylène.

6. Pré-équipement (5) selon l'une des revendications 1 à 5, dans lequel ladite première languette (29) du rideau (17) comprend une butée (52) venant en appui sur une extrémité (31) de ladite première glissière (23) pour référencer ladite position de livraison du rideau (17) par rapport à ladite garniture (16).

7. Pré-équipement selon l'une des revendications 1 à 6, dans lequel ledit rideau (17) comprend une deuxième languette (30) identique à la première languette (29) qui s'étend dans le prolongement d'un autre premier côté dudit corps (35) depuis le même deuxième côté dudit corps (35) que la première languette (29).

8. Procédé d'assemblage et d'immobilisation en position de livraison d'un rideau (17) de réglage ceinture avec une garniture (16) de pied milieu pour un pré-équipement (5) pour un pied milieu d'un véhicule automobile selon l'une des revendications 1 à 7 comportant :
a) une étape d'insertion dudit corps (35) du rideau (17) dans lesdites glissières (23, 24) de la garniture (16) jusqu'à ladite position de livraison ; et
b) une étape d'application d'une première force (**F1**) perpendiculairement à ladite première languette (29) du rideau à distance dudit axe de flexion et dudit ergot (36) dans le sens de la largeur de ladite première languette (29) de sorte que, par torsion élastique de la première languette (29) autour d'un axe de torsion sensiblement perpendiculaire audit axe de flexion, ledit ergot (36) surmonte ledit élément de retenue (25) et s'insère dans ladite cavité (45) pour y être retenu, ledit rideau (17) étant alors immobilisé par rapport à ladite garniture (16) dans ladite position de livraison.
